Europäisches Patentamt

European Patent Office

Office européen des brevets

(19)

(11) **EP 0 850 982 B1**

(12) **EUROPEAN PATENT SPECIFICATION**

(45) Date of publication and mention
of the grant of the patent:
**18.02.2004 Bulletin 2004/08**

(51) Int Cl.7: **C08J 11/08**, C08J 9/28,
C08G 63/89, C08G 63/80

(21) Application number: **97203993.7**

(22) Date of filing: **18.12.1997**

(54) **Process for recovering a solid microporous polyester polymer from a recycle stream and products made thereby**

Verfahren zur Rückgewinnung von festem mikroporösem Polyester aus einem Recyclingstrom und Produkte daraus

Procédé de récupération de polyester solide microporeux à partir d'un courant de recyclage et produits fabriqués par ce procédé

(84) Designated Contracting States:
**AT BE CH DE DK ES FR GB IT LI LU NL PT SE**

(30) Priority: **31.12.1996 US 34617 P**

(43) Date of publication of application:
**01.07.1998 Bulletin 1998/27**

(73) Proprietor: **M&G POLIMERI ITALIA SPA**
**03010 Patrica (Frosinone) (IT)**

(72) Inventors:
• **Brownscombe, Thomas Fairchild**
**Houston, Texas 77005 (US)**
• **June, Raymond Lawrence**
**Houston, Texas 77079 (US)**
• **Semple, Thomas Carl**
**Friendswood, Texas 77546 (US)**

• **Tomaskovic, Robert Stephen**
**Houston, Texas 77083 (US)**

(74) Representative: **Gerbino, Angelo et al**
**Jacobacci & Partners S.p.A.**
**Corso Regio Parco, 27**
**10152 Torino (IT)**

(56) References cited:
**EP-A- 0 376 653**      **EP-A- 0 598 299**
**EP-A- 0 742 251**      **GB-A- 2 120 671**
**US-A- 4 247 498**

• **PATENT ABSTRACTS OF JAPAN vol. 015, no. 377 (C-0870), 24 September 1991 (1991-09-24) & JP 03 152137 A (ASAHI CHEM IND CO LTD), 28 June 1991 (1991-06-28)**

## Description

This invention relates to a process for manufacturing PET pellets with a morphology that is porous, non-fibrous, and sintered; to porous PET products; and to an improved process for PET solid state polymerization.

European Patent Application 0742251 describes a process for the recovery of PET from mixed polymer recycle streams typical of that generated by curbside collection of post-consumer recycled plastics. This process generally included the steps of: (1) contacting the mixed polymer waste stream with a solvent which selectively dissolves the PET, (2) separating the selective solvent containing PET from the residual mixed polymer waste, (3) precipitating the PET from the selective solvent solution by use of a non-solvent for the polyethylene terephthalate or by cooling to form a fine powder precipitate of polyethylene terephthalate crystalline polymer, and (4) removing the selective solvent or selective solvent/non solvent from the precipitated PET. In one of the described embodiments, the mixed polymer recycle stream is prepared for recycling by conventional steps, such as water washing, and additionally, may be chemically washed subsequent to water washing and prior to contact with the selective solvent. The PET recovered may be combined with "virgin" PET and further processed to increase its molecular weight through solid state polymerization.

The precipitation technique described in this process, however, requires large selective solvent or selective solvent/non solvent flows in order to retain reasonable slurry viscosity and particle morphologies after precipitation, which results in high capital and operating costs.

This invention relates to a process for recovering polyester polymer without the need to employ high solvent flows, and without the need to precipitate the polyester polymer from solution, by solidifying a concentrated solution of polyester polymer solubilized in a selective solvent to form a solid material having an interconnecting phase of solid polymer domains rich in polyester polymer and a phase of solvent domains rich in selective solvent, and d) extracting the selective solvent from the solid material to form a microporous solid polyester polymer. By a "concentrated solution" is meant a concentration of polyester polymer effective to allow both the formation of a the described solid with domains rich in polyester polymer and rich in the selective solvent, and the extraction of the solvent from the solid.

The process of this invention comprises recovering polyester polymer as a microporous solid from a mixed polymer recycle stream which comprises:-

a) contacting the mixed polymer recycle stream at elevated temperature with a selective solvent in which polyester polymers are soluble and other polymers present in the recycle stream are substantially insoluble to form a solution of polyester polymer in the selective solvent;

b) if the concentration of polyester in said solution is below 35 wt.%, increasing it to above that value;

c) cooling the selective solvent solution to form a solid material having an interconnecting phase of solid polymer domains rich in polyester polymer and a phase of solvent domains rich in selective solvent;

d) extracting the selective solvent from the solid material to form a microporous solid.

The new products produced by this process are a solid polyester polymer having polyester domains and solvent domains, where the solvent is of the type that is a solvent for the polyester polymer; which can be molded, extruded, and/or cut to form articles having an open microporous structure, where the average pore diameter is in the range of 0.5 to 100 microns, preferably 0.5 to 50 microns.

The product of the invention are useful for filtering, attenuating sound, providing light weight structural members, and time release of substances within the pores.

The microporous polyester polymer may be solid state polymerized by heating to a temperature effective to increase the molecular weight of the polyester polymer, and allowing the molecular weight to so increase.

Polyester polymers include a variety of condensation polymers formed by the combination of a dicarboxylic acid or diester thereof and a dihydric alcohol or glycol. The polyethylene terephthalate (PET) in the recycle stream is typically comprised of repeat units which are derived from terephthalic acid or a diester thereof and ethylene glycol (1,2-ethanediol). However, it is understood that the PET can also be modified with small amounts of other monomers. Such modified PET can contain small amounts of repeat units which are derived from diacids other than terephthalic acid and/or glycols in addition to ethylene glycol. For instance, small amounts of isophthalic acid or a naphthalene dicarboxylic acid can be used in the diacid component utilized in preparing the PET. PET which has been modified with a small amount of a diol containing from 3 to 8 carbon atoms is also representative of such a modified PET. For instance, a small amount of 1,4-butane diol or cyclohexanedimethanol can be utilized in the glycol component used in preparing the modified PET. Normally, no more than about 15 weight percent of the repeat units in such modified PET will be comprised of diacids (or diesters) or diols other than a terephthalic acid and ethylene glycol. Other polyesters include polypropylene terephthalate (PPT), polybutylene terephthalate (PBT), polyethylene naphthalate (PEN), and polybutylene naphthalate (PBN). PPT is derived from terephthalic acid or a diester thereof and propylene glycol (e.g. 1,3-propanediol). PBT is derived from terephthalic acid or a diester thereof and 1,4-butanediol. PEN is derived from a naphthalene dicarboxylic acid, such as 2,6-naphthalene dicarboxylic acid, or a diester thereof, and ethylene glycol. PBN is derived from a naphthalene dicarboxylic acid or a diester thereof, and 1,4-butanediol. PET is the most common polyester currently present in the recycle stream, and will be used herein in an exemplary fashion. However, the subject invention is applicable to, and is intended to encompass, a variety of polyesters, alone or in combination.

The mixed polymer recycle stream collected by commercial recyclers (through curbside collections, etc.) will usually have PET contents ranging from 25 weight percent to 75 weight percent. For economic reasons, it is desirable to increase the PET content in this stream. This is typically accomplished by physically separating the non-PET containers from the PET bottles. This can be accomplished either manually or with automatic equipment. Optionally, colored PET containers (e. g. green carbonated soft drink bottles) may be sorted out by the recycler, leaving a predominantly clear PET recycle stream. Bottle sorting will typically increase the PET content of the recycle stream to between 65 weight percent and 90 weight percent, and is typically limited by the foreign materials used for the containers' labels, lids, and basecups. The PET in the recycle feed stream will usually be derived from PET molded into bottles, trays, and other containers, but may also be derived from other articles, such as fibers, molded sheeting, blister packs, strapping, and film. The PET is typically crushed or ground into "flake" and charged into a water-filled vessel where many foreign plastics (high density polyethylene, polypropylene, expanded polystyrene, etc.) will float and can be easily removed. By combining bottle separation and a simple sink/float step, the PET fraction can easily be increased to 90 weight percent or more.

PET beverage bottles are typically ground into flakes which have a cross-sectional area of from 10 mm2 to 150 mm2, generally from 40 mm2 to 100 mm2. The thickness of the flakes varies with the wall thickness of the bottles which are being recycled. The PET can contain catalyst deactivators, such as phosphates, and other additives, such as impact modifiers, process aids, fillers, pigments and dyes (organic and inorganic), ultraviolet light stabilizers, and antidegradants.

Before contacting the polyester-containing waste with the selective solvent, it may be processed by a variety of optional pre-treatments. In one such optional pre-treatment the mixed polymer recycle stream is contacted with a chemical wash solvent to remove various impurities in the mixed polymer recycle stream. Such impurities include, for example, glues, inks, toxic materials such as pesticides, and organoleptic materials. The chemical wash solvent may also remove selected non-PET polymers, such as polyvinyl chloride and polystyrene, from the mixed polymer recycle stream. In addition, the chemical wash solvent serves to reduce the water content, which may also be considered an impurity, of a water-washed mixed polymer recycle stream.

The chemical wash solvent of the invention is a solvent that will selectively dissolve at least polyvinyl chloride, and preferably polystyrene as well, while not dissolving, or depolymerizing, to any significant degree, PET. Preferred chemical wash solvents dissolve less than 1 part per hundred (pph) PET, measured as parts PET per hundred parts of solvent at room temperature. Suitable chemical wash solvents may be broadly classified as moderately polar, oxygenated hydrocarbon materials that will not depolymerize the PET and generally have boiling points from about 50°C to about 200°C, to allow efficient dissolution of polyvinyl chloride and/or other polymers present in the mixed polymer recycle stream. Such oxygenated hydrocarbons include esters, ethers, and ketones with a total of three to sixteen carbon atoms. Such oxygenated hydrocarbons may be aliphatic or cyclic, but are generally non-aromatic. When the compounds include alkyl groups, such alkyl groups generally contain from one to four carbon atoms.

A preferred group of chemical wash solvents includes methyl ethyl ketone, tetrahydrofuran, tetrahydropyran, cyclopentanone, alkyl-substituted cyclopentanones, hexanones, hexanediones, heptanediones, octanediones, alkyl malonates, diol diacetates (e.g. ethylene glycol diacetate, propanediol diacetate, and butanediol diacetate), alkyl-substituted acetoacetate, 1,3-dioxane, 1,4-dioxane, 1,3-dioxolane, 2-methoxyethyl ether, diethoxymethane, cyclohexanone, alkyl-substituted cyclohexanones, cycloheptanone, alkyl- substituted cycloheptanones, amyl acetate, amyl propionate, mesityl oxide, dibutyl phthalate, and dialkyl formamide, all of which will dissolve both polyvinyl chloride and polystyrene. Any of these chemical solvents may be used wet, in combination with water. For example, an azeotropic mixture of tetrahydrofuran and water may be employed as the chemical wash solvent. Cyclohexanone, cycloheptanone, alkyl-substituted cyclohexanones, alkyl-substituted cycloheptanones., amyl acetate, amyl propionate, diol diacetates, dibutyl phthalate, heptanediones, and mesityl oxide are particularly useful if polyolefins are present in the mixed polymer recycle stream, since these solvents dissolve polyolefins, in addition to dissolving polyvinyl chloride and polystyrene.

The chemical wash solvent is contacted with the mixed polymer recycle stream in ratios of from 0.5: 1 to 10:1, preferably 1:1 to 3:1, based upon weight of chemical wash solvent to mixed polymer. The chemical wash step may be completed with one cycle of contacting the chemical wash solvent with the mixed polymer, or multiple washes may be employed. When multiple washes are employed, the ratio of solvent to polymer is lower than for a single wash, and may provide a cleaner product. Continuous washing may also be used, with further reduction in the amount of wash solvent required per weight of polymer. Countercurrent washing is another useful method.

The chemical wash solvent may be employed at ambient temperatures and under mild conditions. To minimize the contact time required, it is generally preferable to utilize the chemical wash solvent at elevated temperatures, preferably from 50°C to 200°C. Lower temperatures may be required depending upon the boiling point of the chemical wash solvent. For example, when cyclohexanone is employed, the preferred temperature range is from 125°C to 160°C. The upper temperature limit is determined by the boiling point of the chemical wash solvent and the stability of the polymers, and should not be so high as to decompose the polymers. The amount of contact time required to substantially dissolve polyvinyl chloride and/or other polymers present will vary depending upon the solvent and the wash temperature, but will generally be from about 5 minutes to about 60 minutes.

The chemical wash step is preferably conducted at or near atmospheric pressure, although higher pressures may be used. The PET may be contacted with the chemical wash solvent by any conventional method, and using conventional equipment for the operating conditions employed. The chemical wash step is conducted, for example, by combining the PET and the chemical wash solvent in a stirred tank reactor or in a series of stirred tank reactors. The resulting contaminated chemical wash solvent may be separated from the residual mixed polymer recycle stream through a gravity separation, filtration, screening, centrifugation, or other equivalent methods.

It is preferable to remove as much of the chemical wash solvent as is practical from the chemically-washed residual mixed polymer, since any entrained chemical wash solvent will retain the impurities removed from the mixed polymer. A preferred method of separating the chemical wash solvent from the residual mixed polymer includes removal of the chemical wash solvent by gravity separation followed by displacement with another solvent, which may be the selective solvent for PET.

In the polyester polymer dissolution step, the polyester polymer, whether PET or a different polyester polymer, is contacted at an elevated temperature with the selective solvent to form a solution of polyester polymer solubilized in the solvent. The solvent selectively dissolves polyester polymer while maintaining the polyester polymer in polymer form, and substantially rejects dissolution of the other polymers present in the mixed polymer recycle stream. The size of the polyester polymer particles affects the rate of dissolution of the polyester polymer in the selective solvent (small particles dissolve more quickly than larger particles because of larger surface area exposed to the solvent). Agitation of the polyester polymer particles in the selective solvent will speed dissolution of the polyester polymer, as will increasing the temperature of the selective solvent, as long as the temperature is not so high as to cause decomposition in the polymers present.

The selective solvent used in the invention is a solvent that selectively dissolves polyester polymer without significantly dissolving other polymers that may be present, such as polyethylene, polypropylene, polystyrene, and polyvinyl chloride. Some molecular weight reduction in the polyester polymer may occur, but the polyester polymer is maintained largely in a polymer form. The molecular weight reduction that occurs in the polyester polymer is accommodated through subsequent processing, such as solid state polymerization, to rebuild the molecular weight.

Suitable selective solvents may be broadly classified as moderately polar, aprotic materials that do not depolymerize the polyester polymer and have boiling points greater than 180°C, to allow efficient dissolution of polyester polymer at an elevated temperature. Preferred solvents dissolve less than 1 pph of other polymers that may be present in the mixed polymer recycle stream, measured as parts of polymer individually dissolved in a given solvent at elevated temperature (typically 170°C to 250°C). Such solvents include diethyl glutarate, dimethyl succinate, dimethyl sulfoxide, diphenyl sulfone, N-methyl pyrrolidone, and sulfolane.

A preferred group of solvents includes those which are considered "native" to the polyester polymer recovered, meaning that the solvent is, or may decompose to form, raw materials that are useful in making polyester polymer and similar polyester polymers. Dicarboxylic acids, such as terephthalic acid, and glycols, such as ethylene glycol, are not encompassed within this group of solvents since these materials will depolymerize the polyester polymer. However, diesters of the dicarboxylic acids, such as dimethyl terephthalate, and ethylene carbonate, which will decompose to form ethylene glycol and carbon dioxide on exposure to water, are encompassed within this group of solvents. Specifically, a particularly preferred group of selective solvents includes dialkyl terephthalates, dialkyl phthalates, dialkyl isophthalates, dialkyl naphthalates, and mixtures thereof, and alkylene carbonates and mixtures thereof. Specific examples of particularly preferred selective solvents include dimethyl terephthalate, dimethyl phthalate, diethyl terephthalate, dimethyl isophthalate, dimethyl 2,6-naphthalene dicarboxylate, and mixtures thereof, and ethylene carbonate, propylene carbonate, and mixtures thereof. Although these preferred selective solvents are characterized as non-depolymerizing, some molecular weight reduction may occur in the polyester polymer coincident with dissolution in the solvent. The amount of molecular weight reduction which occurs may be controlled through careful selection of the selective solvent, and by minimizing the amount of impurities present in the selective solvent. Some water is expected to be present in the selective solvent, and/or carried with the mixed polymer waste stream, which will result in some hydrolysis and molecular weight reduction of the polyester polymer. In addition, some of the preferred selective solvents, such as ethylene carbonate, may generate decomposition byproducts, particularly at elevated temperatures. The presence of ethylene glycol (a decomposition byproduct) in the ethylene carbonate solvent will also cause a molecular weight reduction in the polyester polymer. In addition, other glycols may be present in ethylene carbonate or the other alkylene carbonate solvents. The diesters appear less susceptible to the generation of such impurities, and provide a higher molecular weight retention in the recovered polyester polymer product.

The presence of impurities in the selective solvent may be utilized to control the molecular weight or intrinsic viscosity of the recovered polyester polymer product. For example, if an alkylene carbonate such as ethylene carbonate is utilized as the selective solvent, it will contain some impurities, such as water and ethylene glycol, which will hydrolyze and reduce the molecular weight of the recovered polyester polymer product. Some impurities, such as ethylene glycol, may be generated through use of the ethylene carbonate under normal operating conditions. The level of such impurities may be controlled or maintained (through addition or removal of the impurities from the selective solvent) at levels that will provide a recovered polyester polymer product with a given molecular weight or intrinsic viscosity. Other variables, such as polyester polymer contact time with the selective solvent, and the temperature of the selective solvent, will also influence the recovered polyester polymer product. Those skilled in the art will be able to adjust the digestion time, temperature, and levels of impurities to achieve the desired molecular weight or intrinsic viscosity for the recovered polyester polymer product, to allow optimum use of the polyester polymer product in subsequent processing.

Minimizing the presence of water, ethylene glycol, and other materials that will cause molecular weight reduction in the polyester polymer is an alternative, and may be achieved through use of relatively pure solvents and by maximizing water removal from the polyester polymer subsequent if any water washing steps are involved in the process. For example, when ethylene carbonate is used as the selective solvent, it is preferable for the ethylene carbonate to contain less than 35 parts per million (ppm) water and less than 25 ppm ethylene glycol. A preferred method for reducing the impurities, such as water, from ethylene carbonate is through the use of zeolite or molecular sieve adsorbents. Although some molecular weight reduction in the polyester polymer is expected to occur, the polyester polymer is maintained in polymer form. For example, the polyester polymer should contain at least 16 repeating units in the polymer chain.

It has been found that the aromatic ester selective solvents, such as dimethyl phthalate, provide a higher molecular weight PET polymer recovered after dissolution, due to greater molecular weight retention through the dissolution step. This molecular weight retention is advantageous in that less processing is required to rebuild the molecular weight in the recycled polyester polymer product.

The alkylene carbonates also offer an advantage. Although the molecular weight of the PET polymer recovered after dissolution in the selective solvent may be lower due to the presence of impurities present in the alkylene carbonates, the molecular weight distribution of the recovered PET polymer indicates a polydispersity of about 2, essentially the same as that of a virgin melt polymerized PET polymer, even when the mixed polymer recycle stream has a polydispersity of greater than 2. This indicates the PET polymers present in the mixed polymer recycle stream are substantially equilibrated, with the high and low molecular weight fractions adjusted to provide a polydispersity of about 2. If it is desirable to obtain a recovered PET polymer with a polydispersity comparable to virgin polymer, use of the alkylene carbonate selective solvents is preferred. If it is preferable to maintain the polydispersity of the mixed polymer recycle stream, use of the aromatic ester selective solvents is preferred.

The amount of selective solvent used should be sufficient to dissolve the polyester polymer in a reasonable amount of time. The selective solvent suitably is contacted with the mixed polymer recycle stream in ratios of from 1:1 to 19:1, preferably from 1.5:1 to 9:1, especially from 2:1 to 5:1, based upon total weight of selective solvent to polyester polymer present in the mixed polymer.

The selective solvent is contacted with the mixed polymer recycle stream in amounts sufficient to produce a selective solvent solution containing from 5 weight percent to less than 75 weight percent, preferably from 10 to 40% wt., and especially from 15 to 35% wt., polyester polymer.

The selective solvent and polyester polymer are contacted at an elevated temperature sufficient to ensure that the temperature of the solution of polyester polymer in the selective solvent is above the solidification temperature of that solution, suitably from 140°C to 285°C, preferably of from 170°C to 250°C, and most preferably from 200°C to 230°C.

The polyester polymer dissolution step is preferably conducted at or near atmospheric pressure, although higher pressures may be used. The polyester polymer may be contacted with the selective solvent by any conventional method, and using conventional equipment for the operating conditions employed. The polyester polymer dissolution step is conducted, for example, by combining the polyester polymer and selective solvent in a stirred tank reactor or a series of stirred tank reactors. The resulting solvent containing polyester polymer may be separated from the residual waste stream through filtration, gravity separation, or other equivalent means, and using conventional equipment.

Unless the polyolefins present in the mixed polymer recycle stream are removed prior to dissolution of the polyester polymer, any polyolefins present will melt and form a liquid phase separate from the selective solvent for polyester polymer. Also, if the polyester polymer contains encapsulated polyolefins (e.g. PET trays containing a small portion of a polyolefin), dissolution of the polyester polymer in the selective solvent may liberate the encapsulated polyolefins, contributing to the polyolefins layer. This polyolefin layer, which typically floats on top of the solvent, is removed from the solvent by phase separation, skimming, decanting or other equivalent means.

If one desires to dissolve a polyester polymer other than polyethylene terephthalate, the same principles set forth above would be applied, that is, a selective solvent should be chosen which dissolves the desired polyester polymer(s) and substantially rejects dissolution of the other polyester polymers, at temperatures, pressures, and solvent concentrations most effective for the dissolution of the desired polyester polymer(s).

As mentioned above, by the phrase "concentrated solution" is meant a concentration of polyester polymer effective to allow both the formation of a the described solid with domains rich in polyester polymer and rich in the selective solvent, and the extraction of the solvent from the solid. This concentration may already be present in the dissolution step a) discussed above, when the concentration of the polyethylene terephthalate at the high end of the range, from 35 to 50 wt.%. In these cases, it is not necessary to have a separate step of increasing the concentration of the polyester polymer solution beyond the concentration used in the dissolution step. However, at the high end of the concentration range, the polyester polymer solution becomes highly viscous making it difficult to thoroughly dissolve all of the polyethylene terephthalate and effectively remove any impurities from the solution in an efficient manner. Thus, it is preferred to use a large excess of solvent in the dissolution step to keep the viscosity of the polyethylene terephthalate solution low, allowing for a shorter dissolution time and more efficient removal of impurities. The preferred polyethylene terephthalate concentration in the dissolution stage is in the range of 15 to 25wt.% of polyethylene terephthalate in the selective solvent. Once the polyethylene terephthalate is fully dissolved in solution and the impurities are removed, the concentration of the solution may subsequently be increased.

Increasing the concentration of the polyethylene terephthalate in solution beyond the concentration of the polyethylene terephthalate in the dissolution step is necessary if the concentration of the polyethylene terephthalate in the dissolution step is too low to permit the formation of the domains in the solid and the extraction of the selective solvent from the solid. Alternatively, it may nevertheless be desirable to increase the concentration of the polyethylene terephthalate in solution even though the minimum concentration necessary to ultimately form a microporous polyester polymer is present, for the purpose of decreasing the amount of solvent one must recover during the extraction stage.

The concentration of the solution may be increased by heating the solution to flash off a portion of the selective solvent. The solution may be heated at temperatures ranging from 200°C to 400°C, conveniently at superatmospheric pressures sufficient to prevent the boiling of the selective solvent, such as 5 to 50 bar, and at a residence time as short as practicable. The particular temperature, pressure, and residence time will vary with the nature of the solution being heated. Once heated, the solution may be ejected into a flash chamber kept at a pressure low enough to cause a desired amount of the selective solvent to flash off, leaving behind a solution having an increased polyethylene terephthalate concentration. The selective solvent flashed off can then be condensed and recycled back to the dissolution step. This step may be optionally followed by addition of virgin polyester polymer to the solution to bring the concentration up to the desired point.

Examples of suitable amounts of virgin polyethylene terephthalate which may be added to the solution to increase its concentration are up to 75% of the total polymer content. The various types of vessels suitable for flashing off the selective solvent include rectified and unrectified flash drums, wiped film evaporators and stripping columns. The various types of vessels suitable for adding additional virgin polymer include stirred tank reactors or in-line mixing elements. Other methods of increasing the concentration of the polyethylene terephthalate polymer in solution include inert gas stripping in stripping columns.

The concentration of the polyethylene terephthalate polymer in solution effective to form a good quality microporous polyethylene terephthalate polymer is generally in the range of 40 wt.% to less than 75 wt.%. At concentrations of 75 wt.% or more, extraction of the selective solvent from the solid polyester polymer-selective solvent material by way of washing with a second solvent was found to be ineffective. It is believed that at such high concentrations of polyethylene terephthalate, the polyethylene terephthalate rich domains and the selective solvent rich domains do not form. At concentrations of less than 40 wt% the porosity of the solid rapidly diminishes and it becomes increasingly friable, rendering it difficult to handle with conventional processing equipment.

Once the desired concentration of polyester solution is obtained, the hot concentrated solution is subjected to a solidification step whereby both the polyester polymer and the selective solvent are solidified to form a solid material which contains an interconnecting polymer phase of solid polymer domains rich in the polyester polymer and a solvent phase rich in the selective solvent. The polymer phase is a solid at the operating temperatures during the subsequent extraction when the selective solvent is extracted from the solid material. In prior processes which employ the precipitation technique, a hot polyester polymer solution is dropped into a liquid solvent bath which is a non-solvent for the polyester polymer and a good solvent for the solvent used to make the polyester polymer solution. In this way, the polyester polymer precipitates out of solution as a solid, and the solvent which was used to make the hot polyester polymer solution is dissolved out of the polyester polymer, as it solidifies, into the liquid solvent bath. In this invention, however, there is employed a method for solidification which results in a solid mass which retains a discrete phase of the selective solvent used to make the hot polyester polymer solution within the solid polyester polymer network. The solidification step of the invention produces a solid material having an interconnected phase of solid polyester polymer rich (i.e. at least 80% wt., and preferably at least 90% wt.) domains and a solvent phase rich (i.e. at least 80% wt., and preferably at least 90% wt.) in the selective solvent.

The selective solvent domains can be liquid or solid at room temperature, or at the operating temperature. Whether the selective solvent is a liquid or a solid will depend on the freezing point of the selective solvent and the temperature at which the solid mass is kept. It has been found that at room temperature, selective solvents such as dimethyl isophthalate and ethylene carbonate are solid, and selective solvents such as propylene carbonate or orthodimethyl phthalate are a liquid in the solidified material.

Some impurities may be present in the domains, derived from impurities present in the hot solution of the polyester polymer. Other impurities may be introduced during the solidification technique from a liquid bath of a particular kind of solvent, discussed below, containing slight amounts of contaminants. Alternatively, the concentration of the polymer or the selective solvent can slightly change if they are slightly soluble in the liquid bath solvent into which the hot polyester polymer solution makes contact. In any case, however, the domains present in the solid mass formed during the solidification step have at least 80 wt.% of the respective polyester polymer or selective solvent.

The domains rich in the polyester polymer can be made up of a single polyester polymer or a mixture of polyester polymers. Likewise, the domains rich in the selective solvent can contains a single type of selective solvent or a mixture of selective solvents. A mixture of selective solvents can be formed by using a mixture of selective solvents in the dissolution phase, or if during the solidification phase, the concentrated polyester solution is contacted with a bath of liquid that is also a selective solvent for the polyester solution, discussed below. An 80 wt.% concentration of the selective solvent would include single selective solvents or mixtures of selective solvents. The same holds for the richness of the polyester polymer. For example, a domain containing a 50/40 wt.% blend of two types of selective solvents, the remainder being impurities, is considered to be a domain rich in selective solvent.

The polyester polymer will form a discrete phase of an interconnecting solid polymer network throughout the solid material. The solid material also contains discrete domains of the selective solvent, which may be continuous or discontinuous, solid or liquid. The solid material produced by the solidification technique has the advantages of being transportable, workable, and conformable into a open microporous body of any desired shape. Unlike the precipitation technique which produces a fine powder filtered away from the selective solvent and subsequently dried, the solidification technique produces a solid material having sufficient mass and structural integrity to transport, wet or dry, without the loss of fines one experiences when transporting a powder. Further, unlike the precipitation technique which produces a solid having a shape limited to the shape of the polyester solution dropped into or contacted with the non-solvent liquid bath, typically a sphere or an irregular shaped particle, the solidification technique used in the invention produces a solid workable and conformable mass polyester polymer containing the selective solvent. This presents numerous opportunities to make a wide variety of molded or cut bodies having a continuous porous structure because the solid material containing the selective solvent can be worked and conformed into a body of a desired shape, after which the selective solvent is extracted to leave behind an open cell microporous polyester polymer retaining the conformed shape.

The solid material produced by the solidification technique is extrudable into a continuous form and can be cut by means of a knife, and air knife, a liquid jet, or other means, into shorter segments of the continuous form, such as, for example, pellets. Since the solidification technique of the invention produces a solid mass having reasonable strength and toughness, any arbitrary size and shape polymer can be made by molding or hot pressing, by mechanically cutting the solid, or by a combination of these techniques. The solidification technique can be used to make rounded end pellets, stars, strands, and cubes. Further, the solidification technique can be used to make articles conformed into desired shapes for such as filter bodies, sponges, bricks, fritted tubes, and gas porous bodies, containing the selective solvent, which when extracted, leaves behind the porous polyester polymer in the conformed shape.

The solidification technique of the invention takes advantage of cooling to solidify the polyester polymer. The cooling temperature should be set to solidify the polyester polymer in the concentrated solution at a rate effective to form a solid mass having an interconnecting domain rich in the polyester polymer and discrete domain(s) of the selective solvent. The particular cooling temperature and rate will vary with the concentration of the solution, and the types of polyester polymer and selective solvent used. In general, however, for most polyester polymers, selective solvents, and solution concentrations, the desired morphology can be obtained by cooling the hot (temperatures ranging from 180°C to 250°C) concentrated polyester solution at temperatures ranging between 20°C to 60°C. Higher or lower temperatures can be used, especially if the temperature is ramped downward at a rate effective to allow the polyester polymer to crystallize into the continuous domain structure described herein.

One method of cooling involves merely dropping or laying down, optionally through a die, the concentrated solution of polyester polymer onto a solid surface whose surface temperature is lower than the hot solution temperature. One example of such a solid surface is a cooled metal conveyor belt. The belts may have a metal or polymer surface, such as teflon. Depending upon the solvent system used and the production method, the rate of transport may be cm. to many meters per minute. Subsequently, the cooled solid polyester polymer-selective solvent mass can be cubed, pelletized, or ground.

In another method, the concentrated hot solution of polyester is contacted with a temperature controlled bath of liquid solvent. The liquid bath solvent which comes in contact with the concentrated polyester solution must be either a solvent for the polyester polymer, or a non-solvent for both the polyester polymer and the selective solvent. Precipitation of the polyester polymer is to be avoided. In the case where the liquid is a solvent for the polyester polymer, the kind of liquid used can be either a solvent or a non-solvent for the selective solvent in the hot polyester solution.

A liquid bath solvent that is a solvent for both the polyester polymer and the selective solvent is a selective solvent. Commingling between the liquid bath solvent and the polyester solution solvent will occur, but without any detrimental effect upon the formation of selective solvent domains in the solidified material because both solvents are selective solvents which dissolve the polyester polymer and prevent it from precipitating. In fact, the liquid bath solvent can be the same type of selective solvent as the selective solvent used in the concentrated polyester solution. Examples of liquid bath solvents that are solvents for both the polyester polymer and the selective solvent are the selective solvents previously described, as well as HFIPA, and protic solvents.

Another type of cooling liquid which can be used to form a solid material having the described morphology is a liquid which is both a non-solvent for the polyester polymer and a non-solvent for the selective solvent. This dual non-solvent liquid can be used without precipitating the polyester polymer from solution because the selective solvent is not dissolved in the liquid bath and continues to keep the polyester polymer dissolved until the polyester polymer has the opportunity to slowly crystallize into an interconnecting solid phase and trap the selective solvent within the interstices of the forming polymer. Examples of liquid solvents which are non-solvents for both the polyester polymer and the selective solvent are fluorocarbons, or n-paraffins for ethylene carbonate, and water for dimethyl phthalate.

The concentrated polyester solution can be introduced into the liquid bath by dropping the concentrated solution of polyester into the bath directly or onto a conveyor which transports the solution through the cooling bath. The cooling bath should be temperature controlled to maintain a constant temperature throughout the bath or maintain a temperature gradient throughout the bath.

In yet another method of cooling, the concentrated polyester solution comes into contact with a vapor having a temperature lower than the hot solution temperature. The formation of the solid material in the vapor occurs either by heat transfer from the hot concentrated polyester solution to the vapor to prevent rapid cooling and skinning, or the vapor will prevent skinning by keeping the polyester polymer in solution at the surface long enough for it to have a surface morphology continuous with and similar to the interior of the solid mass. Examples of suitable vapors are not limited and include inert gases, a solvent of the type in which the polyester is soluble, a solvent of the type in which the selective solvent is soluble, or mixtures thereof. While solvents of the latter type in which the selective solvent is soluble and which is a non-solvent for the polyester polymer are not suitable in liquid form when passing the hot solution through a liquid bath as discussed above, they can be used in vapor form without affecting the ability of the polyester solution to solidify into crystalline domains of polyester polymer and selective solvent. Specific examples of suitable vapors include nitrogen gas, methyl ethyl ketone, acetone, tetrahydrofuran, hexanones, 1,4-dioxane, diethoxymethane, diol diacetates, dibutyl phthalate, dimethyl terephthalate, dimethyl phthalate, dimethyl isophthalate, dimethyl naphthalate, ethylene carbonate, propylene carbonate, or mixtures thereof.

Methods for contacting the hot solution in a vapor are a counter current contact with gases or vapors in a prilling tower. A prilling tower dispenses the liquid into droplets of about 50μm to 500μm diameter. The gas flow rate is sufficient to carry the heat away from the cooling droplets. Vapors can be cooled and recirculated. The vapor rate should be low enough to prevent entrainment of the droplets.

Extraction of the selective solvent from the solid polyester-selective solvent material is achieved by contacting the solid material with a solvent for the selective solvent and a non-solvent for the polyester polymer.

Non-solvents for the polyester polymer and solvents for the selective solvent may be chosen from a broad category of materials. They are in general less polar than the selective solvents. An optional criteria for selection is that they may possess lower boiling points than the selective solvent for ease of recovery and recycle. They should be soluble with the selective solvent over the desired range of operating conditions. If a chemical wash is used in.the pretreatment of the polyester polymer prior to the dissolution phase, it would be convenient to use the same chemical wash in the extraction phase to reduce the equipment required for solvent recycle.

Examples of the solvents which can be used to extract the selective solvent include acetone, methyl ethyl ketone, tetrahydrofuran, tetrahydropyran, cyclopentanone, alkyl-substituted cyclopentanones, hexanones, hexanediones, heptanediones, octanediones, alkyl malonates, diol diacetates (e.g. ethylene glycol diacetate, propanediol diacetate, and butanediol diacetate), alkyl-substituted acetoacetate, 1,3-dioxane, 1,4-dioxane, 1,3-dioxolane, 2-methoxyethyl ether, diethoxymethane, cyclohexanone, alkyl-substituted cyclohexanones, cycloheptanone, alkyl- substituted cycloheptanones, amyl acetate, amyl propionate, mesityl oxide, and dialkyl formamide. Any of these chemical solvents may be used wet, in combination with water. For example, an azeotropic mixture of tetrahydrofuran and water may be employed as the extraction solvent. A preferred group of solvents includes acetone, methyl ethyl ketone, tetrahydrofuran, and cyclohexanone.

Methods for contacting and extracting the selective solvent from the solid material are not limited so long as the selective solvent is removed from the solid material to leave behind the porous polyester polymer. One method for extraction can take place in a continuous moving bed of the solid material, preferably in the form of particles, with a counter current of the extraction solvent flowing across the particle surfaces. Instead of a moving bed, one can use a series of mixer-settlers. The number of wash cycles required to remove all of the selective solvent from the polyester polymer will depend upon the type of selective solvent, the type of extraction solvent, the wash ratio of the extraction solvent to the polyester polymer, and the amount of residual selective solvent left in the porous polyester that is tolerable for the end use application. The number of required theoretical stages, N, for a separation of the selective solvent from the polyester polymer can be calculated as follows:

$$N= \frac{\log[(yb - yb^*)/(ya-ya^*)]}{\log[(yb - ya)]/(yb^* - ya^*)]}$$

where $ya^*$ is the concentration of the selective solvent in the liquid in equilibrium with the entering solid, $yb^*$ is the concentration of the selective solvent in the liquid leaving the Nth stage, yb is the concentration of the selective solvent in the extraction solvent entering the Nth stage, and ya is the concentration of the selective solvent in the liquid leaving the first stage. The more extraction stages used, the less residual selective solvent remains in the porous polyester polymer. There does come a point of diminishing returns, however, because small amounts of residual selective solvent left in the porous polyester polymer can be tolerated, especially when the selective solvent is of the type that can polymerize into the backbone of the polyester polymer during solid state polymerization without significantly affecting the desired molecular weight of the final polymer. Typically, however, the porous polyester polymer should have no more than 500ppm of residual selective solvent left in the porous polymer.

The temperature of the extraction solvent is not particularly limited, and we have shown that the amount of selective solvent leached out of the polyester polymer using an extraction solvent is independent of temperature where the extraction solvent readily dissolves the selective solvent at room temperature. Where the type of extraction solvent used, however, does not readily dissolve the selective solvent at room temperature, but would at elevated temperatures, then it would be desirable to raise the temperature of the extraction solvent contacting the solid mass.

The pressures applied to the solid mass and/ or the extraction solvent during extraction are also not limited. It would be advantageous, however, to apply vacuum to the solid polyester polymer-selective solvent material at one surface, such as the lower surface, and contacting the solid material with the extraction solvent at a different surface, such as the upper surface, to pull the extraction solvent through the polymer mass at a flow rate greater than the flow which gravity can accomplish. This would reduce the extraction time or increase the amount of selective solvent removed at any given time, thereby reducing the number of stages needed for extraction.

The ratio of the extraction solvent to the solid polyester polymer-selective solvent material is also not limited. An optimal balance can be found by taking into the desired contact time, the number of extraction stages desired, the desired purity of the porous solid from residual selective solvent, and the amount of extraction solvent one can economically handle in the process. The number of stages for extraction quickly reduces as the ratio of extraction'solvent to the solid mass increases from greater than 1:1 to about 8:1, by weight, and thereafter further increases in.extraction solvent ratios do not bring about drastic reductions in the number of extraction stages needed to remove the selective solvent. 'Optimal ratios of extraction solvent to the solid are usually going to be within the range of 3:1 to 6:1, by weight.

Once the selective solvent is extracted from the porous polyester polymer, the solids can be dried by evaporating and recovering any residual extraction solvent that might remain on and within the porous solid. Evaporation can occur at elevated temperatures. The extraction solvents, such as THF or acetone, are easily volatized from the pores of the solid by nitrogen stripping at temperatures below the glass transition temperature of the polyester polymer tc avoid hydrolysis of the polymer, typically from 36° to 100°C, with lower temperatures possible if the drying occurs at subatmospheric pressures.

Although it is preferable to recover polyester polymer with a molecular weight comparable to that of the polyester polymer in the recycle polymer stream, in general, the process of the invention will cause some molecular weight reduction in the recovered polyester polymer product. The recovered porous polyester polymer of the invention can be further processed to increase its molecular weight, known as solid state polymerization.

In a typical PET polymerization process, the terephthalic acid (or dimethyl terephthalate) and ethylene glycol are combined and polymerized in a liquid or melt phase. The melt phase polymerization process typically involves a series of reactors in which the molecular weight of the polymer is sequentially increased, until the PET reaches an intrinsic viscosity (IV) of no more than 0.6 dl/g, equivalent to a number average molecular weight of 'about 18,600. The melt polymer is extruded, cooled, and pelletized to form an amorphous prepolymer product. This prepolymer i's subsequently heated to increase its crystallinity, and then further polymerized in the solid state to an IV of 0.7 dl/g or more, preferably to an IV of at least 0.8 dl/g.

One of the novel aspects of the subject invention is combining the recovered porous polyester polymer product with polyester polymer manufactured from typical raw materials, for further processing. For example, the recovered porous polyester polymer may be added to a melt phase polymerization reactor that contains polymer having about the same IV range as that of the recovered porous polyester polymer. The polyester polymer may or may not be further polymerized in the melt phase. Alternatively, if the recovered polyester polymer has an IV comparable to the melt polymer being extruded, the recovered polyester polymer may be combined with virgin polyester polymer prior to entering the extruder, or in the extruder. The recovered porous polyester polymer may also be combined with virgin polyester polymer in other melt processing operations, such as a pelletizer or a spinneret in a fiber-making operation.

One of the advantages of combining the recovered porous polyester polymer with virgin polyester polymer not obtained from recycled polyester polymer is that it facilitates production of a polyester polymer product containing less than 100% recycled polyester polymer. Commercially available recycle-content polyester polymer resins currently contain less than 50 weight percent recycled polyester polymer. A recycle content of from about 15 weight percent to about 35 weight percent is typical, and a recycle content of about 25 weight percent is common. Production of a polyester polymer resin containing 100 percent recycle content is technically feasible with the subject invention, and may be useful for some applications.

Subsequent to combining the porous recovered polyethylene terephthalate with virgin polyethylene terephthalate in a melt phase, or in place of this combination, the polyester polymer may be solid state polymerized at temperatures ranging from above their polymerization temperature to below their sticking temperature. Usually, suitable temperatures to advance the molecular weight of polyethylene terephthalate polymer will range from 205°C to 230°C, which can be incrementally increased as the polymerization reaction proceeds. The porous polyester polymer solids produced by the method of the invention exhibit accelerated.rates of solid state polymerization because the high surface area of the porous solid results in shortened mean free-pathlengths for the polymerization by-products, such as water and ethylene glycol, to diffuse or evaporate cut of the low permeability polymer phase.

The porous polyester polymer can be solid state polymerized, optionally in mixture with virgin polyester polymer, batchwise or continuously, under vacuum or in a stream of inert gas which is homogeneously dispersed throughout the reaction zone. The bed of the reactor can be fixed, static, fluidized, or moving. In one example, the porous polyester polymer can be solid state polymerized in a tubular reactor flowing from the top to the bottom of the tube at a rate controlled by the rate of discharge at the bottom of the tube, with a countercurrent flow of inert gas through the polyester polymer at a rate below the fluidisation velocity of the porous solids. The by-products, such as water and ethylene glycol, are volatized and carried out of the reaction zone in the inert gas current. In the solid stating process, the IV of the polyester polymer can be increased to 0.7dl/g or more, depending upon the residence time and temperature of the polymer in the reaction zone.

It is desirable to obtain a recovered porous polyester product which has an IV of from 0.2 dl/g to 0.8 dl/g. After the recovered porous polyester product is solid state polymerized, with or without combined virgin polyester, it preferably has an IV of from 0.6 dl/g to 5.0 dl/g. IV is typically used as an indicator for the molecular weight of polyester polymers, however, such polymers can also be characterized by number average molecular weight. It is desirable to obtain a recycled porous polyester product which has a number average molecular weight of from about 3700 to about 150,000.

IV is defined as the limit of the fraction (ln v)/C as C, the concentration of the polymer in solution, approaches zero, wherein v is the relative viscosity which is measured for several different polymer concentrations in a given solvent. For PET, a mixed solvent system of 60:40 phenol:tetrachloroethane is employed at 30°C. Different solvent systems may be employed for other polyester polymers, depending upon the molecular weight of the polyester.

Molecular weight distributions for the polyester polymer polymers can be determined using'Gel Permeation Chromatography (GPC). PET samples for GPC analysis can be prepared by dissolving PET in hexafluoroisopropanol at a concentration.of 0.5 to 1.0 milligram of PET per milliliter of solvent. The GPC system can employ columns filled with either silica or styrene divinyl benzene beads. The GPC system can be equipped with detectors that are calibrated' to known PET standards.

The density of the porous polyester polymer is lower than the density of the same non-porous polyester polymer having the same IV and crystallinity. The density of the porous polyester polymers produced by the method described above is 25% to 75% of the density of the same non-porous polyester polymer.

The size of the micropores in'the products of the invention range from 0.5 to 75 microns, usually from about 20 to 50 microns. The pores have a substantially spherical shape, and are typically seen connected to each other in irregular shapes with a portion of the spherical shape protruding from the connected mass. It was within these pores where the selective solvent was located and extracted out.

The invention is further illustrated by the following illustrative examples, which are not to be construed as limiting the invention.

Example 1

In this example, the manufacture of a microporous polyethylene terephthalate polymer is demonstrated on a laboratory test bench scale. A polyethylene terephthalate resin, Cleartuf (Registered Trade Mark) 8006 PET resin, was dried in a vacuum oven at temperatures exceeding 120°C and at a pressure of less than 650 Pa. The solvent employed was dimethyl phthalate (DMP) which was stored over 4A molecular sieves. Approximately 200 grams of a 50 percent PET solution were made by mixing these two components in a 500 ml flask equipped with an overhead paddle stirrer, nitrogen purge, and thermocouple at approximately 215°C. The dissolution of the PET in the DMP solvent occurred over a period of about 30 minutes with vigorous agitation. After dissolution, the 50 percent PET solution was hardened into sheets by pouring the contents of the flask onto a clean stainless steel spill pan kept at ambient temperature. As the material cooled, the solution turned opaque over a period of about two minutes indicating that PET crystals were forming. The 200 gram charge formed a sheet roughly 0.1m2 in area and about 3 mm in thickness. After cooling was complete, the material was broken into slabs and stored in jars.

Examination of the 50 percent PET in DMP solution under a microscope after hardening revealed a solid with grains of material that were roughly 20-50 microns in diameter.

The slabs in the jars were subsequently ground into a powder of nominal particle diameter 1.5 mm or less with a dedicated laboratory grinder. Three different kinds of extraction solvents for removal of the DMP in the solid were investigated. They were tetrahydrofuran (THF), methylethylketone (MEK), and cyclohexanone. Various ratios of extraction solvents and solid were investigated by contacting the powder and the extraction solvent in 40 ml EPA vials with stir disks and a ReactiVial stirring block heater. The ratios of extraction solvent to solid for each extraction solvent tested were varied from 8:19 to 150:1. After contact with each wash solvent over a 12 hour period, the liquid was sampled and filtered for HPLC analysis. The wash solids were filtered from the solvent in a filter flask and dried under flowing air for a few minutes to evaporate the bulk of the wash solvent.

The HPLC method for DMP utilized UV detection at 254 nm and a toluene internal standard. Elution was controlled by a methanol-acetonitrile solvent gradient and a 25 cm by 5 mm C18 column with 5 micron silica particles.

This same process was repeated using a 75 percent weight percent PET solution in DMP. This solution also successfully hardened and lead to a material that had a granular matrix.

Extraction of the DMP from the 50 weight percent hardened PET was successful in each of the wash solvents investigated. Examination of the 50 weight percent PET solid after extraction with THF revealed a material that was quite porous in nature. Since PET is essentially insoluble in room temperature THF, it was concluded that DMP had been leached out of the solid matrix. On the other hand, attempts to remove DMP from the 75 weight percent PET hardened solution via extraction with THF were unsuccessful. It was concluded that the higher PET concentration material most likely failed to form the interconnected pore structure for the DMP to partition into upon cooling.

Example 2

Solid PET-DMP material was made using the same procedure described in Example 1 above. This time, different size PET/DMP particles were obtained by grinding the solid mass and screening to the desired particle size ranges. Two particle sizes were formed, one by grinding to a nominal particle diameter of 1.5 mm or less, and the other 3 mm x 6 mm particles cut from a hardened slab of material. In this example, however, rather than waiting for the conclusion of a twelve hour time period before sampling, the contacting procedure was modified so that the supernatant liquid was sampled at regular intervals without disturbing agitation of a solid in the sample vials. DMP content was then determined by the HPLC method.

In the first series of experiments, a sample of less than 1.5 mm particles of PET/DMP was washed with THF, and a second sample of the 3 mm x 6 mm particles of PET/DMP was washed with THF. Each of the samples were agitated at the same rate and washed at the same phase ratios.

A contact time on the order of about 5 minutes was all that was necessary to reach equilibrium for the 1.5 mm or less size particles. A longer wash time was needed for the larger particles, most likely due to the formation of a thin polymer skin on the PET/DMP slab that formed during cooling from the melt. Thus, controlling the cooling rate of the polyester polymer-selective solvent solid can minimize the thickness of the film that may develop on the surface of the slab. To minimize the thickness of a surface film and increase the surface area free of a surface film, it would be preferable to drop the PET dissolved in the selective solvent onto a chilled belt followed by a grinding with, for example, a cubing grinder.

**Claims**

1. Process for recovering polyester polymer as a microporous solid from a mixed polymer recycle stream which comprises:-

    a) contacting the mixed polymer recycle stream at elevated temperature with a selective solvent in which polyester polymers are soluble and other polymers present in the recycle stream are substantially insoluble to form a solution of polyester polymer in the selective solvent;
    b) if the concentration of polyester in said solution is below 35 wt.%, increasing it to above that value;
    c) cooling the selective solvent solution to form a solid material having an interconnecting phase of solid polymer domains rich in polyester polymer and a phase of solvent domains rich in selective solvent;
    d) extracting the selective solvent from the solid material to form a microporous solid.

2. Process as claimed in claim 1 wherein the selective solvent is an alkylene carbonate or dialkyl phthalate.

3. Process as claimed in claim 1 or 2 or wherein the concentration of polyester is increased in step b) by flashing or evaporating off selective solvent.

4. Process as claimed in claim 3 wherein the proportions of polymer recycle stream and selective solvent are chosen to give a solution containing 15 to 25% polyester polymer in the selective solvent, which is increased to between 35 and 50wt% by removal of selective solvent.

5. Process as claimed in any one of claims 1-4 wherein step a) is carried out at a temperature between 140° and 285°.

6. Process as claimed in any one of the preceeding claims wherein the cooling step c) is carried out by contacting the selective solvent solution at a temperature between 180° and 250°C with a solid surface, a liquid or a vapour, cooled to below 60°C, suitably ambient temperature or 20°C.

7. Process as claimed in claim 6 wherein the cooling is carried out by contact with a cooled metal surface.

8. Process as claimed in any one of the preceding claims wherein the selective solvent is extracted from the solid material by contacting with a liquid which is a solvent for the selective solvent and a non-solvent for the polyester polymer.

9. Process as claimed in claim 8 wherein the liquid is acetone, tetrahydrofuran, methyl ethyl ketone, or mixtures thereof.

10. Process as claimed in any one of the claims wherein the process conditions are selected to produce in step c) a solid material containing at least 80% wt. of domains rich in polyester polymer.

**Patentansprüche**

1. Verfahren zum Rückgewinnen von Polyesterpolymer als mikroporösem Feststoff aus einem Mischpolymer-Recyclingstrom, umfassend:

    a) das In-Kontakt-Bringen des Mischpolymer-Recyclingstroms bei erhöhter Temperatur mit einem selektiven Lösungsmittel, in dem Polyesterpolymere löslich und andere, im Recyclingstrom vorhandene Polymere im Wesentlichen unlöslich sind, um im selektiven Lösungsmittel eine Polyesterpolymer-Lösung zu bilden;
    b) falls die Polyesterkonzentration in der Lösung bei unter 35 Gew.% liegt, das Anheben derselben auf einen Wert, der darüber liegt;
    c) das Abkühlen der selektiven Lösungsmittellösung, um ein festes Material zu bilden, das eine Verbindungsphase aus Festpolymerbereichen, die reich an Polyesterpolymer sind, und eine Phase aus Lösungsmittelbereichen, die reich an selektivem Lösungsmittel sind, aufweist;
    d) das Extrahieren des selektiven Lösungsmittels aus dem festen Material, um einen mikroporösen Feststoff zu bilden.

2. Verfahren, wie in Anspruch 1 beansprucht, wobei das selektive Lösungsmittel ein Alkylencarbonat oder Dialkylphthalat ist.

3. Verfahren, wie in Anspruch 1 oder 2 beansprucht, wobei die Polyesterkonzentration in Schritt b) erhöht wird, indem das selektive Lösungsmittel abgedunstet oder abgedampft wird.

4. Verfahren, wie in Anspruch 3 beansprucht, wobei die Anteile am Polymer-Recyclingstrom und am selektiven Lösungsmittel so gewählt sind, um eine Lösung zu ergeben, die 15 bis 25% Polyesterpolymer im selektiven Lösungsmittel enthält, was durch Entfernung des selektiven Lösungsmittels auf 35 bis 50 Gew.% erhöht wird.

5. Verfahren, wie in einem der Ansprüche 1-4 beansprucht, wobei Schritt a) bei einer Temperatur zwischen 140° und 285° durchgeführt wird.

6. Verfahren, wie in einem der vorhergehenden Ansprüche beansprucht, wobei der Abkühlungsschritt c) durchgeführt wird, indem die selektive Lösungsmittellösung bei einer Temperatur zwischen 180° und 250° mit einer festen Oberfläche, einer Flüssigkeit oder einem Dampf, die bzw. der auf unter 60°C, zweckmäßigerweise auf Umgebungstemperatur oder 20°C, abgekühlt wurde, in Kontakt gebracht wird.

7. Verfahren, wie in Anspruch 6 beansprucht, wobei die Abkühlung durch Kontakt mit einer gekühlten Metalloberfläche durchgeführt wird.

8. Verfahren, wie in einem der vorhergehenden Ansprüche beansprucht, wobei das selektive Lösungsmittel aus dem festen Material extrahiert wird, indem es mit einer Flüssigkeit in Kontakt gebracht wird, die ein Lösungsmittel für das selektive Lösungsmittel und ein Nichtlösungsmittel für das Polyesterpolymer ist.

9. Verfahren, wie in Anspruch 8 beansprucht, wobei die Flüssigkeit Aceton, Tetrahydrofuran, Methylethylketon oder Mischungen davon ist.

10. Verfahren, wie in einem der Ansprüche beansprucht, wobei die Verfahrensbedingungen so ausgewählt sind, um in Schritt c) ein festes Material herzustellen, das zumindest 80 Gew.% an Bereichen, die reich an Polyesterpolymer sind, enthält.

**Revendications**

1. Procédé de récupération d'un polymère de polyester sous forme de solide microporeux à partir d'un courant de recyclage de polymère mélangé, qui comprend :

    a) la mise en contact du courant de recyclage du polymère mélangé à une température élevée avec un solvant sélectif, dans lequel les polymères de polyester sont solubles, et d'autres polymères présents dans le courant de recyclage sont substantiellement insolubles, pour former une solution de polymère de polyester dans le solvant sélectif ;
    b) si la concentration en polyester dans ladite solution est en dessous de 35 % en poids, son augmentation au-dessus de cette valeur ;
    c) le refroidissement de la solution de solvant sélectif pour former un matériau solide ayant une phase en interconnexion de domaines de polymères solides riches en polymère de polyester et une phase de domaines de solvant riches en solvant sélectif ;
    d) l'extraction du solvant sélectif du matériau solide pour former un solide microporeux.

2. Procédé selon la revendication 1, dans lequel le solvant sélectif est un carbonate d'alkylène ou un phtalate de dialkyle.

3. Procédé selon les revendications 1 ou 2 ou dans lequel la concentration en polyester est augmentée dans l'étape b) par vaporisation instantanée ou élimination par évaporation du solvant sélectif.

4. Procédé selon la revendication 3, dans lequel les proportions du courant de recyclage de polymère et de solvant sélectif sont choisies pour donner une solution contenant 15 à 25 % de polymère de polyester dans le solvant sélectif, qui est augmentée jusqu'entre 35 et 50 % en poids, par retrait du solvant sélectif.

5. Procédé selon l'une quelconque des revendications 1 à 4, dans lequel l'étape a) est mise en oeuvre à une température comprise entre 140 °C et 285 °C.

6. Procédé selon l'une quelconque des revendications précédentes, dans lequel l'étape c) de refroidissement est effectuée en mettant en contact la solution de solvant sélectif à une température comprise entre 180 °C et 250 °C avec une surface solide, un liquide ou une vapeur, refroidi jusqu'en dessous de 60 °C, convenablement à température ambiante ou 20 °C.

7. Procédé selon la revendication 6, dans lequel le refroidissement est mis en oeuvre par contact avec une surface métallique refroidie.

8. Procédé selon l'une quelconque des revendications précédentes, dans lequel le solvant sélectif est extrait du matériau solide par mise en contact avec un liquide, qui est un solvant pour le solvant sélectif et un non solvant pour le polymère de polyester.

9. Procédé selon la revendication 8, dans lequel le liquide est l'acétone, le tétrahydrofuranne, la méthyléthylcétone ou des mélanges de ceux-ci.

10. Procédé selon l'une quelconque des revendications, dans lequel les conditions du procédé sont choisies pour produire dans l'étape c) un matériau solide contenant au moins 80 % en poids de domaines riches en polymère de polyester.